# EUROPÄISCHE PATENTSCHRIFT

(11) **EP 1 631 487 B1**
(45) Veröffentlichungstag und Bekanntmachung des Hinweises auf die Patenterteilung: **24.01.2007**
(21) Anmeldenummer: 04735875.9
(22) Anmeldetag: 03.06.2004
(51) Int. Cl.: B62D 55/21

(54) **BÄNDERGLEISKETTE FÜR KETTENFAHRZEUGE**
BAND TRACK CHAIN FOR TRACK-TYPE VEHICLES
CHENILLE A BANDE POUR VEHICULES CHENILLES

(30) Priorität: 06.06.2003 DE 10326099
(43) Veröffentlichungstag der Anmeldung: 08.03.2006
(73) Patentinhaber: Diehl Remscheid GmbH & Co., D-42857 Remscheid (DE)
(72) Erfinder: WELP, Alexandra, 44787 Bochum (DE); SCHLUPP, Kurt, 42659 Solingen (DE); SPIES, Klaus, 42859 Remscheid (DE)
(74) Vertreter: Diehl Patentabteilung
(86) Internationale Anmeldenummer: PCT/EP2004/005982
(87) Internationale Veröffentlichungsnummer: WO 2004/108507

(56) Entgegenhaltungen:
- EP-A- 0 410 216
- US-A- 1 949 423
- US-A- 1 966 450
- US-A- 2 350 444
- US-A- 2 390 905

## Beschreibung

Die Erfindung bezieht sich auf eine Bändergleiskette für Kettenfahrzeuge nach dem Oberbegriff des Anspruches 1.

Aus der US-PS 1,966,450 ist eine Gummiblockkette bekannt. Die Länge des Gummiblocks ist etwas kleiner als die Kettenteilung. Zur Verbindung der Gummiblöcke liegen außenseitig geschraubte Verbinder. Die Verbinder klemmen verdrehfest Hohlbolzen fest. Diese Hohlbolzen sind im Gummiblock einvulkanisiert.

Eine Bändergleiskette entsprechend dem Oberbegriff ist aus der EP-B1-0 410 216 bekannt. Bandabschnitte sind mit Scharniergliedern aus Stahl verbunden. Die Scharnierglieder sind ihrerseits durch einen Stahlbolzen miteinander verbunden. Nachteilig daran ist, dass das Fahrverhalten des Fahrzeugs durch zu große Unwuchten aufgrund der Scharnier-Schließstellen negativ beeinflusst wird.

Die Patentschrift US 1 949 423 offenbart eine Bändergleiskette nach dem Oberbegriff des Anspruchs 1.

Aufgabe der Erfindung ist es daher, für eine Bändergleiskette mit Bandsegmenten Schließstellen vorzuschlagen, die so leicht als möglich gestaltet sind.

Die Erfindung löst diese Aufgabe entsprechend den kennzeichnenden Merkmal des Anspruchs 1.

Vorteilhafte Weiterbildungen der Erfindung sind den Unteransprüchen zu entnehmen.

Vorteilhaft wird durch die Erfindung erreicht, dass die Ausdehnung der Schließstelle in Bandrichtung sehr klein und aufgrund der gummigelagerten Kettenbolzen biegeweich ist. Aufgrund der Verbinder liegt eine leichte Montage oder Demontage der Kette am Fahrzeug vor. Ein Anheben des Fahrzeugs ist nicht erforderlich. Die Bandkette wird, wie bei Gliederketten üblich, auf dem Boden ausgelegt und nach dem Auffahren des Fahrzeugs auf den ausgelegten Kettenstrang an der oder den Schließstellen verbunden. In umgekehrter Reihenfolge erfolgt das Ablegen der teilbaren Kette.

Weitere Vorteile bestehen darin, dass der Aufwand bei der Kettenmontage und - demontage am Fahrzeug sehr klein ist bei geringem Personalaufwand. Die Unfallgefahr bei der Montage der Bandkette am Fahrzeug ist vermindert, da das Fahrzeug nicht angehoben werden muss. Schließlich ist der Lager- und Transportraum durch die Aufrollmöglichkeit der Bandkette mit Schließstelle oder Schließstellen gering. Bei Bandketten mit mehreren Schließstellen können bei Beschädigung einzelne Bandsegmente direkt am Fahrzeug ausgetauscht werden.

Ein Ausführungsbeispiel ist in der Zeichnung dargestellt. Es zeigt:
- Figur 1: eine Schließstelle im Teilschnitt entsprechend einer Einzelheit I nach Figur 2,
- Figur 2: eine Bändergleiskette mit einer Schließstelle und
- Figur 3: einen Schnitt III-III nach Figur 2.

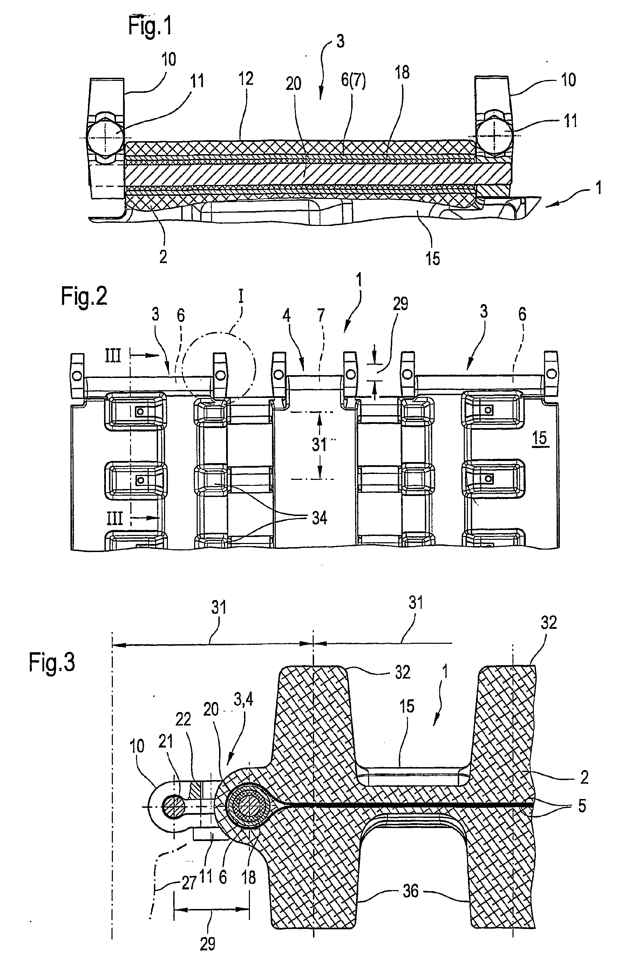

Nach Figur 1 besteht eine Schließstelle 3, 4 einer Bändergleiskette 1 aus zwei Verbindern 10 mit Schrauben 11, einem im Grundkörper 12 einvulkanisierten Rohr 6, einer vorgespannten Gummilagerung 18 und einem, in die Gummilagerung 18 eingepressten Bolzen 20.

Die Schließstellen 3, 4 entsprechend Figur 2 sind prinzipiell gleich aufgebaut entsprechend dem Aufbau gemäß Figur 1.

Nach Figur 3 klemmt der Verbinder 10 über die Schraube 11 mit Gewinde 22 die beiden Bolzen 20, 21 zweier Bandsegmente 15, 27. Die Bolzen 20, 21 sind als Rundbolzen, also mit vollem Kreisquerschnitt versehen, so dass eine Kerbbruchgefahr durch Anflächungen oder Bohrungen nicht gegeben ist.

Die durch die Bolzen 20, 21 und den Verbinder 10 definierte Schließstelle 3, 4 weist eine Teilung 29 auf. Diese beträgt 1/3 der Bandsegmentteilung 31, die definiert ist durch den Abstand von Führungszähnen 32 und dazu fluchtenden Antriebsnocken 34.

Bodenseitig weist die Bändergleiskette 1 einvulkanisierte Laufnocken 36 auf.

## Patentansprüche

1. Bändergleiskette (1) für Kettenfahrzeuge und Schneemobile, bestehend aus einzelnen, austauschbaren Bandsegmenten (15),
wobei ein Bandsegment (15) einen Grundkörper (2) aus Gummi aufweist, der einvulkanisierte, zugbelastbare Einlagen (5) aufweist,
die im Bereich der Schließstellen (3,4) der Bandsegmente (15) einen quer im Grundkörper (2) befestigten Zuganker (6) umschlingen,
wobei Verbinder (10) die Zuganker (6) zweier Bandsegmente (15,27) miteinander verbinden,
und wobei der Zuganker aus einem Rohr (6) besteht,
**dadurch gekennzeichnet,**
**dass** das Rohr (6) einen gummigelagerten Bolzen (20,21) aufweist, und
die Bolzen (20,21) durch Verbinder (10) verdrehfest festgesetzt sind.

2. Bändergleiskette nach Anspruch 1,
**dadurch gekennzeichnet,**
**dass** die aus zwei Rohren (6) den Gummilagern (18), den Bolzen (20) und den Verbindern (10) bestehende Schließstelle (3,4) innerhalb einer Kettenteilung (31) liegt und
durch die Gummilagerungen (18) biegeweich ausgebildet ist.

3. Bändergleiskette nach Anspruch 2,
**dadurch gekennzeichnet,**
**dass** die Teilung (29) der Schließstelle (3,4) etwa 30 % der Teilung (31) des Bandsegmentes (15,27) beträgt.

4. Bändergleiskette nach Anspruch 2,
**dadurch gekennzeichnet,**
**dass** an der Schließstelle (3,4) pro Bandsegment (15,27) wenigstens ein Rohr (6) aus Stahl einvulkanisiert ist.

5. Bändergleiskette nach Anspruch 4,
**dadurch gekennzeichnet,**
**dass** an der Schließstelle (3,4) drei Rohre (6,7) aus Stahl einvulkanisiert sind.

## Claims

1. Caterpillar band chain (1) for tracked vehicles and snowmobiles, comprising two individual, exchangeable band segments (15),
in which a band segment (15) has a rubber basic body (2), which has inserts (5) which are vulcanized in and can be loaded under tension,
and which are wrapped around a tie-rod (6) which is fastened transversely in the basic body (2) in the region of the closing points (3, 4) of the band segments (15),
in which connectors (10) connect the tie-rods (6) of two band segments (15, 27) to one another,
and in which the tie-rod comprises a tube (6),
**characterized**
**in that** the tube (6) has a rubber-mounted bolt (20, 21) and the bolts (20, 21) are arranged in a rotationally fixed manner by connectors (10).

2. Caterpillar band chain according to Claim 1,
**characterized**
**in that** the closing point (3, 4) - comprising two tubes (6), the rubber mountings (18), the bolts (20) and the connectors (10) - lies within one chain pitch (31) and
is made flexible by means of the rubber mountings (18).

3. Caterpillar band chain according to Claim 2,
**characterized**
**in that** the pitch (29) of the closing point (3, 4) is approximately 30% of the pitch (31) of the band segment (15, 27).

4. Caterpillar band chain according to Claim 2,
**characterized**
**in that** at least one steel tube (6) is vulcanized in at the closing point (3, 4) on each band segment (15, 27).

5. Caterpillar band chain according to Claim 4,
**characterized**
**in that** three steel tubes (6, 7) are vulcanized in at the closing point (3, 4).

## Revendications

1. Chenille à bandes (1) pour véhicules chenillés et scooters des neiges, comprenant des segments de bande (15) individuels et remplaçables, un segment de bande (15) présentant un corps de base (2) à base de caoutchouc, qui présente des insertions (5) vulcanisées à l'intérieur et pouvant être sollicitées au niveau de la traction, qui entourent dans la zone des points de fermeture (3, 4) des segments de bande (15) un tirant d'ancrage (6) fixé transversalement dans le corps de base (2), des éléments de liaison (10) reliant les tirants d'ancrage (6) de deux segments de bande (15, 27) entre eux, et le tirant d'ancrage étant constitué d'un tuyau (6), **caractérisée en ce que** le tuyau (6) présente un boulon (20, 21) monté sur caoutchouc, et les boulons (20, 21) sont fixés de façon résistante à la torsion par des éléments de liaison (10).

2. Chenille à bandes selon la revendication 1, **caractérisée en ce que** le point de fermeture (3, 4) comprenant deux tuyaux (6), les paliers de caoutchouc (18), les boulons (20) et les éléments de liaison (10) est disposé à l'intérieur d'un pas de chaîne (31) et est conçu souple en flexion du fait des paliers en caoutchouc (18).

3. Chenille à bandes selon la revendication 2, **caractérisée en ce que** le pas (29) du point de fermeture (3, 4) représente environ 30 % du pas (31) du segment de bande (15, 27).

4. Chenille à bandes selon la revendication 2, **caractérisée en ce que** au moins un tuyau (6) en acier est vulcanisé au point de fermeture (3, 4) par segment de bande (15, 27).

5. Chenille à bandes selon la revendication 4, **caractérisée en ce que** trois tuyaux (6, 7) en acier sont vulcanisés au point de fermeture (3, 4).
